# EUROPEAN PATENT APPLICATION

(11) **EP 1 884 888 A1**
(43) Date of publication of application: **06.02.2008**
(21) Application number: 06756478.1
(22) Date of filing: 23.05.2006
(51) Int. Cl.: G06K 19/077, G06K 19/04, G06K 19/07

(54) **ID TAG PACKAGE AND RFID SYSTEM**

(30) Priority: 25.05.2005 JP 2005151724
(71) Applicant: International Business Machines Corporation, Armonk, New York 10504 (US)
(72) Inventor: TANAKA, Hidekazu, IBM Japan Ltd., Yamato-shi, Kanagawa 242-8502 (JP); FUKUDA, Kaoru, IBM Japan Ltd., Yamato-shi, Kanagawa 242-8502 (JP); TAKENOSHITA, Hiroyuki, IBM Japan Ltd., Yamato-shi, Kanagawa 242-8502 (JP)
(74) Representative: Litherland, David Peter
(86) International application number: PCT/JP2006/310222
(87) International publication number: WO 2006/126524

(57) **Abstract**

[Object] An ID tag package for RFID, which can realize good radio communication regardless of the existence of external metal and water and, which at the same time, is strong enough to endure external stress even under a poor utilization environment, and an RFID system using the package are provided.

[Solution] An RFID system of the present invention including an ID tag package 20 which includes a structure covering an ID tag 22 for RFID, the structure having the thickness L1 and L2 necessary for reducing the attenuation of the electromagnetic wave arising at least from the existence of external metal or water, and containing an elastic layer 24 enabling to reduce the external stress.

## Description

### 2. Detailed Description of the Invention:

### [Field of the Invention]

The present invention relates to a noncontact identification technology using an electromagnetic wave, which is, in general, called as RFID (Radio Frequency Identification), and in particular, relates to a package technology for a tag of RFID which is attached to an object to be identified.

### [Background art]

RFID is a technology in which an electromagnetic wave is transmitted from an interrogator (reader/writer) to an RF tag which is attached to an object to be identified and ID information of the object is read or written without contact. A method using an RF tag of card type such as a train commuter ticket is now being widely used as an RFID. Moreover, it is expected in the future that a method using an RF tag which is smaller or stronger and durable becomes widespread for the traceability of products and machines, etc.

The RF tag is called an ID tag or IC tag (hereinafter, it is called an ID tag). The ID tag usually comprises an IC chip and an antenna for radio communication. Many ID tags do not contain batteries therein for waking up. In the case when a battery is not contained, the IC in the ID tag receives the electromagnetic wave from the reader/writer and is woken up by the energy thereof. Therefore, in order to communicate with each other, it is necessary that the ID tag receives the electromagnetic wave having the energy at least necessary to generate a voltage enabling the waking up of the IC chip.

However, since the RFID uses radio communication, the electromagnetic wave for communication is easily influenced by the external environment, specifically adjacent metal and water. For instance, in the case where an object to be identified is a metal or a beverage PET bottle, the electric field strength of the electromagnetic wave received by the ID tag which is attached to the surface thereof is reduced. The reasons are as follows: (a) the electric field strength becomes extremely small in the vicinity of metal, (b) the propagation speed and the apparent wavelength of the electromagnetic wave in water become extremely small since water has a remarkably large relative permittivity, and (c) the dielectric loss is large. As a result, there is a case where the IC does not wake up and radio communication itself becomes impossible. Moreover, even if the IC wakes up, there is a case where the reader/writer cannot read or write the necessary ID information because the operation of the IC is not stable.

Furthermore, the IC chip and the antenna composing the ID tag are weak against external stress (pressure, shock, and temperature change) and are easily damaged. For instance, in an environment in which a construction machine (generator, pump, and compressor, etc.) is used, there is a possibility that an ID tag attached to the machine becomes deteriorated or damaged by shock and rapid temperature changes, etc. In addition, in the case of a machine used in water, there is a possibility that transmission and reception of RFID is not available to begin with, even if an ID tag is attached to the machine, because the machine and the ID tag are both submerged in water.

The prior art regarding noncontact ID tag is disclosed in, for instance, Japanese Unexamined Patent Publication (JP-A) No. 2002-196634 and No. 11-102424. JP-A No. 2003-196634 discloses a technology in which an ID tag is covered with a cover ring composed of a metal in order to improve the mechanical strength of the ID tag. JP-A No. 11-102424 discloses a technology in which a buffer layer composed of a gel state resin is provided on the substrate in the ID tag package in order to relieve the external stress.

However, in these patent publications, attention has not been paid on the reduction of energy of the electromagnetic wave for communication due to the influence of adjacent metal or water. That is, any measures against the reduction in the energy of the electromagnetic wave are not disclosed when metal or water exist adjacent thereto. Moreover, any RFID related to the one used in water is not disclosed. And, in addition to taking such measures, there is no disclosure about taking any measures to mitigate the external stress at the same time.
[Patent Document 1] Japanese Unexamined patent Publication (Kokai) No. 2003-196634
[Patent Document 2] Japanese Unexamined patent Publication (Kokai) No. 11-102424

### [Disclosure of the Invention]

### [Problems to be solved by the Invention]

The object of the present invention is to provide an ID tag package for RFID which can realize good radio communication regardless of the existence of external metal or water, and which at the same time, is strong enough to endure external stress even under the poor utilization environment, and to provide an RFID system using the package.

### [Means for Solving the Problems]

It is the characteristics of the ID tag package and the RFID system using the package of the present invention that (a) a structure covering the ID tag for the RFID has the thickness necessary for reducing the attenuation of the electromagnetic wave arising at least from existence of external metal or water, and that (b) the structure contains an elastic layer enabling to reduce the external stress.

### [Advantage of the Invention]

Since the ID tag package and the RFID system using the package of the present invention have the above-described characteristics (a) and (b), good radio communication can be realized regardless of the existence of external metal or water, and at the same time, the ID tag package is strong enough to endure external stress. The ID tag package of the present invention enables good transmission and reception of RFID without paying particular attentions or giving special considerations to the materials of an object to be identified or the way of loading the object, which were conventionally deemed to be necessary. The ID tag package in the invention is highly enduring regardless of the utilization environment.

### [Best Mode for Carrying out the Invention]

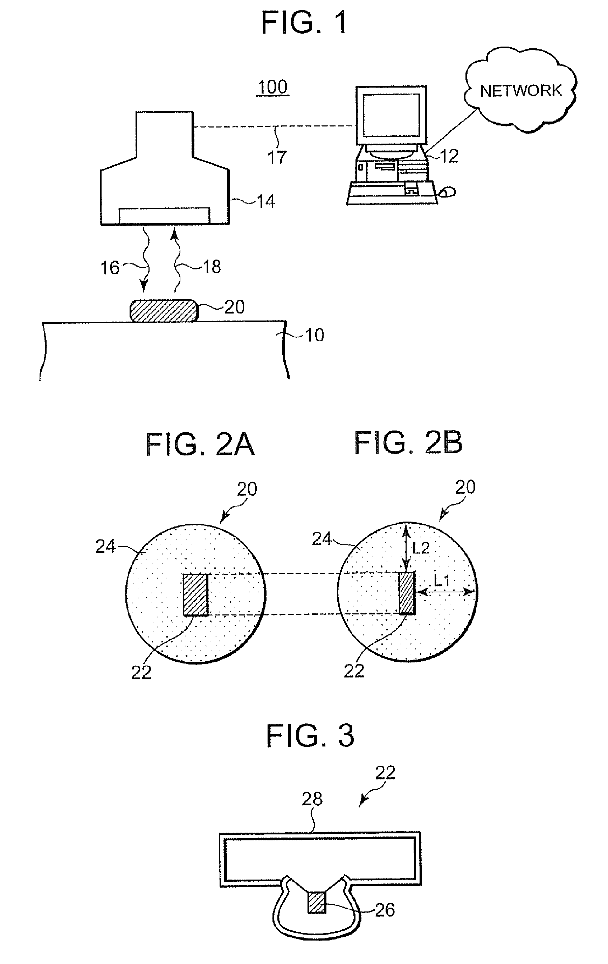

An ID tag package and a RFID system using the ID tag package of the present invention will be explained referring to the drawings. Fig. 1 is a schematic view illustrating a RFID system 100 of the present invention. An electromagnetic wave 16 is sent from a reader/writer 14 to an ID tag package 20 which is attached to the surface of an object 10 to be identified. The ID tag package 20 is woken up by the energy of the electromagnetic wave 16 and the electromagnetic wave 18 for reply is returned to the reader/writer 14. According to this intercommunication, the reader/writer 14 can write information into the ID tag package 20, and moreover, updated ID information can be read from the ID tag package 20. The frequency of the electromagnetic wave used for communication is long frequency (for example, 125 kHz), high frequency (for example, 13.56 MHz), or Ultra-High frequency (for example, 2.45GHz), etc. The reader/writer 14 stores the read ID information in a memory arranged therein.

Moreover, the reader/writer 14 communicates with a personal computer (PC) 12, etc. for administration through wired and wireless network 17 and sends the ID information to the PC 12. The PC 12 stores the ID information sent from the reader/writer 14 and manages it. In the case of a small reader/writer, it is possible to connect directly with the PC 12 using an USB connector, etc. Moreover, the PC 12 can be connected with the central host computer and another client's PC through the communication network. As the ID information managed herein, not only conventional simple identification information such as the product number, etc. but also traceability information such as the location of the product and the utilization history, etc. are included. Information such as stock in the factory and stock in a distribution channel, etc. can be monitored in real time by managing the information. As a result, it becomes possible to plan a decrease in the amount of stock or a reduction in the turnover of inventory, maintain the freshness of fresh food, or improve the efficiency of callback operations.

Fig. 2 is a view illustrating an embodiment of the ID tag package 20 of the present invention. Fig. 2A is a cross-sectional view viewed from the front of the ID tag package 20. Fig. 2B is a cross-sectional view viewed from the side of the ID tag package 20. The ID tag package 20 comprises an ID tag 22 and a spherical shaped structure 24. The ID tag 22 is placed at the center of the structure 24. The ID tag 22 has a plate-shaped appearance. Fig. 3 is a plan view illustrating an example of the ID tag 22. The ID tag 22 comprises an IC chip 26 and an antenna 28 for radio communication. The IC chip 26 includes an arithmetic part and a memory (not shown in the figure), etc. inside thereof. The ID information is stored in memory. The antenna 28 in Fig. 3 is of a folded dipole type. The shape of the antenna may be of other type.

In the ID tag package 20 in Fig. 2, the ID tag 22 is placed at the center of the spherical shaped structure 24. The distances L1 and L2 between the surface of the ID tag 22 and the surface of the structure 24 are almost constant. Therefore, almost the same distance from the surface of the ID tag package 20 to the ID tag 22 can be maintained against an electromagnet wave irradiated from any directions. That is, even if the ID tag package 20 is attached to metal or a container holding water, at least constant distances L1 and L2 from the metal or the water can be maintained. As a result, it is possible to reduce the attenuation of the electromagnetic wave arising from the existence of metal or water. Specifically, it is more effective when an electromagnetic wave such as a microwave is used.

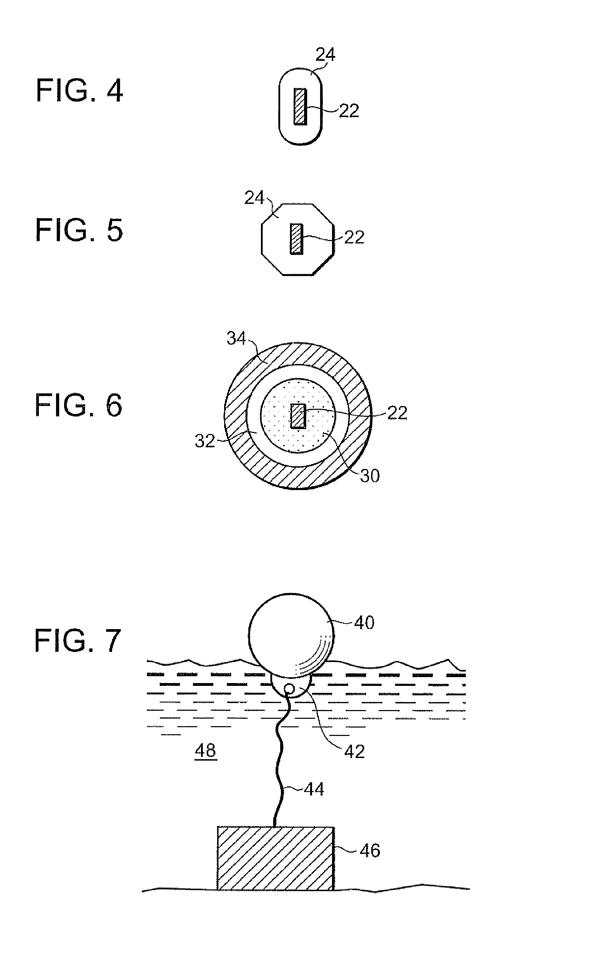

As a shape of the structure 24, a spherical shape shown in Fig. 2 is the best from the viewpoint of maintaining an almost constant distance in any directions from the whole surface of the ID tag 22. However, if a distance at least longer than a certain length can be maintained, it is sufficient for waking up the ID tag 22, so that this may take other shapes such as an oval spherical shape shown in Fig. 4 or a polyhedral shape shown in Fig. 5. Herein, both Figs. 4 and 5 are cross-sectional views seen from the front. Moreover, in order to make the installation on the object to be identified easy, only one section of the structure may be made flat (attachment surface).

A necessary minimum thickness of the structure 24 should be decided to be at least longer than the distance where energy sufficient for waking up the ID tag can be obtained from the energy of the electromagnetic wave reaching the ID tag during communication. The thickness is decided corresponding to the position of the reader/writer, the kind of electromagnetic wave (frequency) used, and the wake-up energy (electric field strength) of the IC in the ID tag. Concretely, the thickness is decided so as to obtain sufficient electric field strength for waking up the IC according to experiments and simulations under the conditions in which metal or water is placed close by. For instance, according to an experiment using 2.45GHz band RFID system, the distance between the metallic plate and the ID tag, that is, the thickness of the structure, is required to be 2.5 cm or more in order to obtain 144 (dBuV/m) or more of electric field strength for waking up. In addition, the thickness of the structure should be made thick in accordance with the utilization environment of the RFID in order to improve endurance against external stress.

The material of the structure 24 is preferably an elastic material which can mitigate (reduce) the stress from the outside. For instance, the material of the structure is selected from any one or the combination of rubber, plastic, a polymeric material such as polyethylene or Teflon, an animal or plant fiber, a synthetic fiber, and a foamed resin. When the material is selected, the relative permittivity of the material (for instance, air: 1.0, rubber: 3.0, Teflon: 2.1) and the dielectric loss (or dielectric loss tangent: tan δ) are considered. Herein, the dielectric loss means a phenomenon where the vibration of a dipole in a dielectric cannot follow the electric field due to the electromagnetic field, a shift (something similar to friction) is generated giving rise to a loss of the electromagnetic energy as heat. A material having a small dielectric loss is preferable for the material of the structure. For instance, alumina, polyethylene, and Teflon, etc. are materials having a small dielectric loss.

Since the wavelength of the electromagnetic wave becomes shorter (1/(εr)^{(1/2)}) in a material having high relative permittivity (Er) in the case of an RFID which is resonated by the length of the antenna (element length), the size of the antenna can be made smaller. As a result, the ID tag can be minimized. Herein, high relative permittivity means from 5 to 10 and preferably about 10. In the case of a material having an extremely high relative permittivity like water (relative permittivity: 81), the wavelength of the electromagnetic wave becomes too short to obtain sufficient energy even while resonating when the length of the antenna (effective aperture size) is made small. Moreover, dielectric (absorption) loss is also large in water.

It is not necessary that the structure is made of a single material. Fig. 6 is a cross-sectional view illustrating an example of the structure composed of a plurality of layers. The structure (package) shown in Fig. 6 is composed of a ceramic layer 30 having high relative permittivity (for instance, alumina: 9.5), a rubber layer 32, a foamed resin layer 34, in order, from the side close to the ID tag 22. There is an advantage that the ceramic (alumina) has a small dielectric loss. In general, ceramics have poor mechanical strength (tensile strength, impact resistance, thermal shock, etc.) but the external stress can be mitigated (absorbed) by covering it with a rubber layer and a foamed resin layer. There may be no limitation on the number of layers. An air layer may be provided as an air cushion. The combination of materials may also be selected arbitrarily. For instance, the elastic material layers can be selected to make the elastic modulus greater from the inside toward the outside. Additionally, assuming utilization under high temperatures, the outermost layer of the structure may be composed of a fireproof and heat-resistant material, for instance, a firebrick, and a heat-resistant composite plastic layer. Accordingly, a temperature increase inside of the ID tag is suppressed, resulting in it being possible to utilize the ID tag under high temperatures.

Fig. 7 is a schematic view illustrating an example of an ID tag package to perform RFID of an object put in liquid like water. A hook 42 is provided at the surface of the spherical shaped ID tag package 40 for attachment of a connecting cable 44. One end of the cable 44 is connected with the object 46 in the liquid 48. The structure of the ID tag package is composed of a material which is light and floats on the liquid. An air layer may be included in the structure to make it lighter. At least the surface of the structure is covered with a material layer which is waterproof and has chemical resistance. By using the ID tag package 40 shown in Fig. 7, ID information of a machine used in the liquid, for instance, a submerged pump, can be obtained at remote sites. It is not intended to be limited for use in the liquid and this method can be applied if an object is located far from the reader/writer.

### 3. Brief Description of the Drawings

Fig. 1 is a schematic view illustrating an RFID system of the present invention;
Fig. 2 is a cross-sectional view illustrating an embodiment (spherical shape) of an ID tag package of the present invention;
Fig. 3 is a plan view illustrating an ID tag of the present invention;
Fig. 4 is a cross-sectional view illustrating an embodiment (oval spherical shape) of an ID tag package of the present invention;
Fig. 5 is a cross-sectional view illustrating an embodiment (polyhedral shape) of an ID tag package of the present invention;
Fig. 6 is a cross-sectional view illustrating an embodiment (multi-layer structure) of an ID tag package of the present invention; and
Fig. 7 is a cross-sectional view illustrating an embodiment (with hook) of an ID tag package of the present invention.

### [Description of symbols]

10, 46: object
12: host computer (PC)
14: reader/writer
16, 18: electromagnetic wave
20, 40: ID tag package
22: ID tag
24: structure
26: IC chip
28: antenna
30: ceramics layer
32: rubber layer
34: foamed resin layer
42: hook for attachment of cable
44: cable
48: liquid (water)

## Claims

1. An Identification (ID) tag package comprising:
an ID tag including an IC chip and an antenna for radio communication; and
a structure covering the ID tag, said structure having the thickness necessary for reducing the attenuation of the electromagnetic wave arising at least from existence of external metal or water, and containing an elastic layer enabling to reduce the external stress.

2. The ID tag package according to claim 1, wherein the surface of said structure is placed at an almost constant distance from the whole surface of the ID tag.

3. The ID tag package according to claim 1, wherein
the thickness of said structure is determined so that the energy of the electromagnetic wave reaching the ID tag during communication becomes at least greater than the energy necessary for waking up the ID tag.

4. The ID tag package according to claim 1, wherein
said structure has at least one shape selected from the group of an oval spherical shape, a spherical shape, and a polyhedral shape.

5. The ID tag package according to claim 1, wherein
said structure comprises a plurality of layers and contains a layer of material having high relative permittivity.

6. The ID tag package according to claim 5, wherein
said layer of material having high relative permittivity comprises ceramics.

7. The ID tag package according to claim 5, wherein one of said plurality of layers is an air layer.

8. The ID tag package according to claim 5, wherein said elastic layer comprises at least one or the combination of rubber, plastic, a polymeric material, a fiber of an animal or a plant, a synthetic fiber, and foamed resin.

9. The ID tag package according to claim 8, wherein
the surface of said structure is covered with a heat-resistant material layer.

10. The ID tag package according to claim 1, wherein
said structure has a fitting for attachment of a cable from an object to be identified by the ID tag.

11. A Radio Frequency Identification (RFID) system comprising an ID tag package, a reader/writer which can communicate by radio with the ID tag package and a host computer which can communicate with the reader/writer, said ID tag package comprising:
an ID tag including an IC chip and an antenna for radio communication; and
a structure covering the ID tag, said structure having the thickness necessary for reducing the attenuation of the electromagnetic wave arising at least from existence of external metal or water, and containing an elastic layer enabling to reduce the external stress.
